# EUROPÄISCHE PATENTSCHRIFT

(11) **EP 2 423 496 B1**
(45) Veröffentlichungstag und Bekanntmachung des Hinweises auf die Patenterteilung: **14.01.2015**
(21) Anmeldenummer: 11466023.6
(22) Anmeldetag: 23.08.2011
(51) Int. Cl.: F02M 35/022, F02M 35/08, B01D 45/12

(54) **Zyklonabscheider mit horizontaler Zyklonachse**
Cyclone separator with horizontal cyclone axis
Séparateur cyclonique doté d'un axe de cyclone horizontal

(30) Priorität: 26.08.2010 CZ 20100641
(43) Veröffentlichungstag der Anmeldung: 29.02.2012
(73) Patentinhaber: Skoda Auto A.S., 293 60 Mladá Boleslav (CZ)
(72) Erfinder: Novotný, Jan, 19016 Praha 9 (CZ); Hatschbach, Petr, 253 01 Hostivice (CZ); Dostál, Ondrej, Praha 3 130 00 (CZ)

(56) Entgegenhaltungen:
- EP-A2- 1 167 743
- WO-A1-02/056999
- DE-U1-202008 014 211
- US-B1- 6 402 799

## Beschreibung

### Technisches Gebiet

Die Erfindung betrifft einen Zyklonabscheider mit horizontaler Zyklonachse im Ansaugtrakt eines Verbrennungsmotors, insbesondere eines Verbrennungsmotors im Fahrzeug.

### Bisheriger Stand der Technik

Der Einlassteil des Ansaugtraktes eines Verbrennungsmotors hat die Aufgabe, möglichst wirksam die Wassertropfen und Staubpartikel aus der Luftströmung bei möglichst geringen Druckverlusten abzuscheiden. Bei längerer Fahrt im Regen ist gerade die höchstmögliche Abscheidung der Wassertropfen aus der Luftströmung grundlegend. Der Luftfilter in der Ansaugleitung ist nämlich fähig nur begrenzte Wassermenge zu absorbieren und falls seine Absorptionskapazität überschritten wird, lässt er die Wassertropfen durch. Diese können dann ungünstig den Lauf des Verbrennungsmotors dadurch beeinflussen, dass sie die Messung des Luftdurchflusses mit einem gleich hinter dem Filtergehäuse angeordneten Durchflussmesser verzerren oder diesen Durchflussmesser sogar direkt beschädigen.

Die meist genutzte Einrichtung, die fähig ist kontinuierlich die Wassertropfen oder Staubpartikel aus der Luftströmung abzuscheiden, ist ein Zyklonabscheider. Wegen den Raumeinschränkungen im Fahrzeug kann er in verschiedenen Formen ausgeführt sein. Eine klassische, allgemein verwendete Ausführung des Zyklonabscheiders ist die mit einer vertikalen Drehachse. So können die aus der Strömung abgeschiedene Partikel einfach durch die Gravitationswirkung abgeleitet werden. Dieser klassische Abscheider hat jedoch in der vertikalen Richtung deutlich größere Abmessungen als in der horizontalen Richtung.

Falls aus Raumgründen (zu wenig Platz in der Höhe, mehr in der Breite) der klassische vertikale Zyklonabscheider nicht im Bereich am Verbrennungsmotor des Fahrzeuges eingebaut werden kann, müssen verschiedene Kompromisslösungen gesucht werden. Grundsätzlich ähneln diese Lösungen üblicherweise wieder einem Zyklonabscheider oder es wird wenigstens eine abrupte Änderung der Strömungsrichtung vorgenommen, welche die Tropfen in der Strömung nicht folgen können und an der Wand des Abscheiders haften bleiben. Problematisch wird die Lösung einer funktionstüchtigen kontinuierlichen Ableitung des Abscheidungsproduktes außerhalb der Leitung, da innerhalb des Abscheiders geringerer Druck als in der Umgebung ist und durch eventuelle Ableitungsöffnung die Luft angesaugt wird, die eine Ableitung des Abscheidungsproduktes verhindert.

Die Nachteile der bekannten Lösungen der Abscheidung von Wassertropfen aus dem durch Ansaugleitung des Verbrennungsmotors angesaugter Luftströmung ergeben sich vor allem aus den größeren oder geringeren Raumeinschränkungen. In den meisten Fällen ist nämlich nicht möglich ein klassisches, verlässliches und wirksames Zyklonabscheider mit vertikaler Drehachse der Strömung in die Ansaugleitung anzuordnen. Verschiedene Kompromisslösungen haben dann eine reduzierte Abscheidungsfähigkeit wegen der Kompromissgestalt der Zyklone, aber auch wegen ungeeigneter Ausführung der Sammlung des Abscheidungsproduktes und seiner Ableitung außerhalb des Abscheidergehäuses. Darüber hinaus können solche Abscheider auch einen höheren Druckverlust ausweisen.

Eine der Kompromisslösungen ist der Einsatz eines Abscheiders mit horizontaler Zyklonachse. Vorhanden ist zum Beispiel die im europäischen Patent EP 1167743B1, bzw. US Patent US 2002/0046724A1 beschriebene bekannte Lösung eines Zyklonabscheiders mit horizontaler Achse. Diese Lösung besteht aus einem Teil, der die Luftströmung in der Ansaugleitung in Rotation versetzt und einem anknüpfenden Teil, in dem die in der Luftströmung mitgetragenen Tropfen durch die Fliehkraftwirkung abgeschieden werden. Dieser Abscheider kann gut in dem Fall eingesetzt werden, wenn der Einlass sowie Auslass des Abscheiders in der Richtung der Längsachse des Fahrzeuges angeordnet werden kann und in dieser Richtung ausreichender Platz im Motorraum vorhanden ist. Ist es nicht der Fall, müssen zusätzliche Einlassleitungen mit Krümmern eingebaut werden, wodurch das gesamte Einbauraum vergrößert wird.

In der Patentschrift US 6402799 B1 ist im ersten Patentanspruch veröffentlicht, dass der Einlass in den Abscheider an einem Ende des Abscheidergehäuses angeordnet ist. Im geschlossenen Zyklongehäuse entsteht somit ein standardmäßiges Wirbelgebilde, im Patentdokument sind dann mehrere Arten der Ableitung des Abscheidungsproduktes beschrieben.

Eine Zyklone mit horizontaler Achse mit einem Einlass in den Zyklonbereich entlang der im Wesentlichen ganzen Länge der Zyklone wurde auch beim bestehenden zur Abscheidung der Wassertropfen dienenden Element verwendet, aus dem die neue vorgeschlagene Lösung des Abscheiders ausgeht. Die konkrete Raum- und Formgestaltung des bestehenden Abscheiders wurde durch die große Raumeinschränkung in der bestehenden Einbau begrenzt. Der Abscheider eignet sich für die Position des Abscheiders mit einer horizontal seitlich orientierter Auslassleitung. Wegen unzureichender Lösung der Ableitung des Abscheidungsproduktes hat dieser Abscheider in der praktischen Anwendung nur geringere Abscheidungswirksamkeit.

### Darstellung der Erfindung

Die genannten Nachteile der bekannten Lösungen werden durch den vorliegenden Zyklonabscheider der Wassertropfen mit horizontaler Drehachse der Strömung beseitigt, der unter Bedingungen der wesentlichen Raumeinschränkungen eingesetzt werden kann, insbesondere beim nachteilig breiten und niedrigen Einlassquerschnitt und einer horizontal seitlich orientierten Auslassleitung.

Der Gegenstand der Erfindung ist der Entwurf eines Zyklonabscheiders der Wassertropfen mit horizontaler Achse und mit gelöster kontinuierlicher Sammlung und Abführung des Abscheidungsproduktes außerhalb des Abscheidergehäuses. Die Sammlung des Abscheidungsproduktes wird direkt im Gehäuse der Zyklone realisiert, sodass der komplette Abscheider gegenüber anderen Lösungen sehr kompakt sein kann. Aus dem bestehenden ungenügenden Abscheider wurde der Einlass- sowie Auslassquerschnitt und die Grundgestalt beibehalten.

Der Zyklonabscheider mit horizontaler Zyklonachse besteht aus einem Einlass für das Gemisch der Luft mit Aerosole in den Zyklonbereich entlang der im Wesentlichen ganzen Länge der Zyklone, einer Zyklone mit horizontaler Achse und einem Luftauslass. Der Zyklonabscheider weist eine Sammelleitung in Form eines Beckens auf, die im Abscheider unter der Kante der unteren Wand der Zyklone angeordnet ist. Die Sammelleitung weist einen geringeren Abfall hin zur Seitenwand des Abscheiders auf, wo eine Öffnung ausgebildet ist, welche in die nach unten gerichtete Röhre mündet. Die Röhre weist am unteren Ende ein Rückschlagventil auf.

Die neue technische Lösung also liegt in der Ausführung von zwei grundsätzlichen Anpassungen, welche die Funktionstüchtigkeit und ausreichende Wirksamkeit des Abscheiders sicherstellen:
1/ Der Abscheider hat eine gelöste Sammlung der abgeschiedenen Wassertropfen in eine Sammelleitung.
2/ Die Ableitung des Abscheidungsproduktes aus der Sammelleitung außerhalb des Abscheiderraumes wird durch eine an der Wand des Abscheiders außerhalb der Strömung angeordnete und mit einem Rückschlagventil beendete vertikale Abflussleitung gelöst.

### Übersicht der Figuren der Zeichnungen

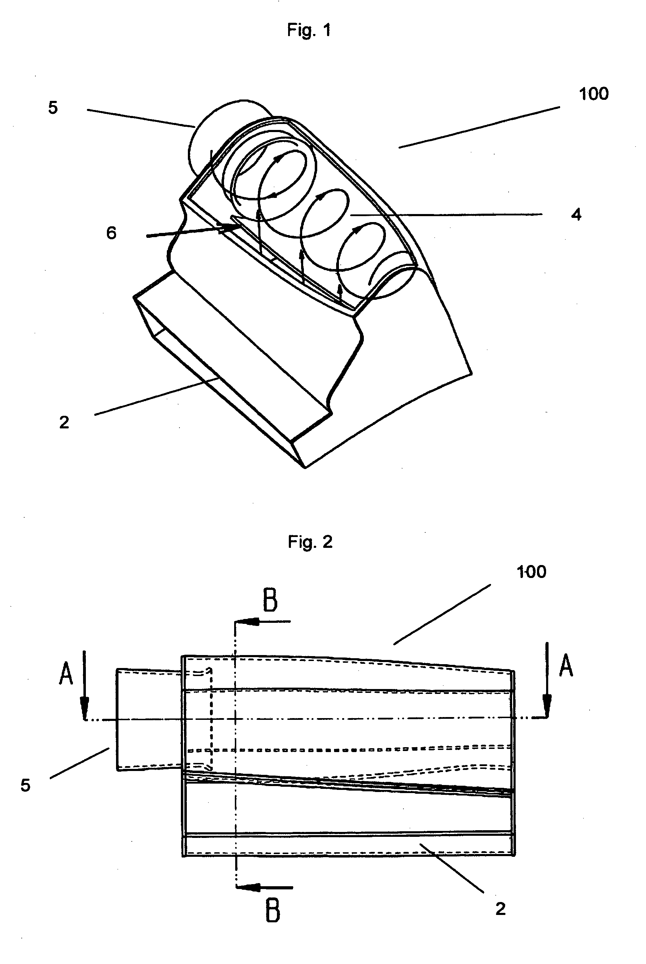

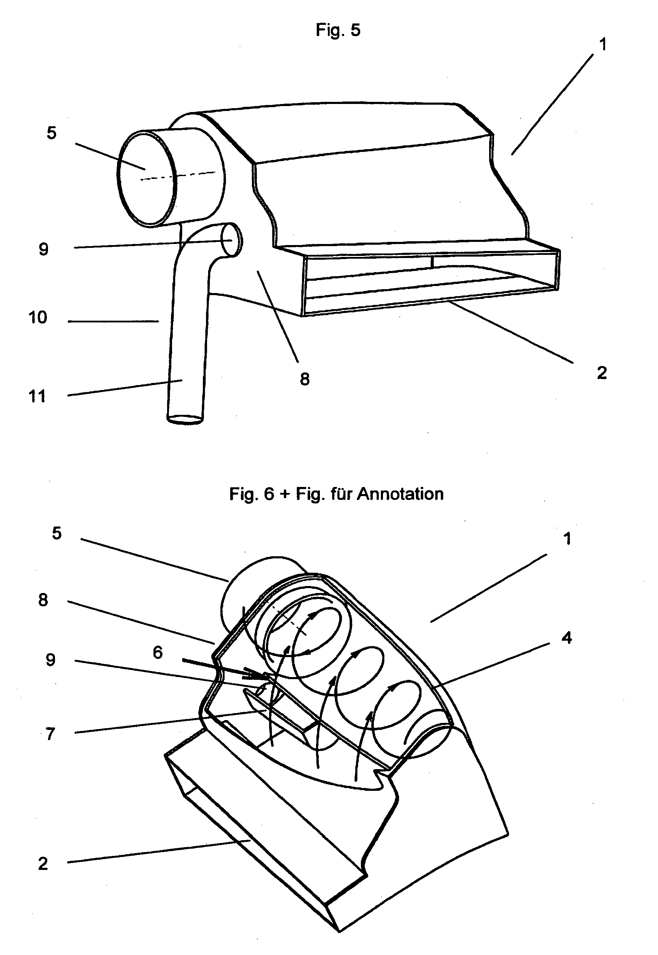

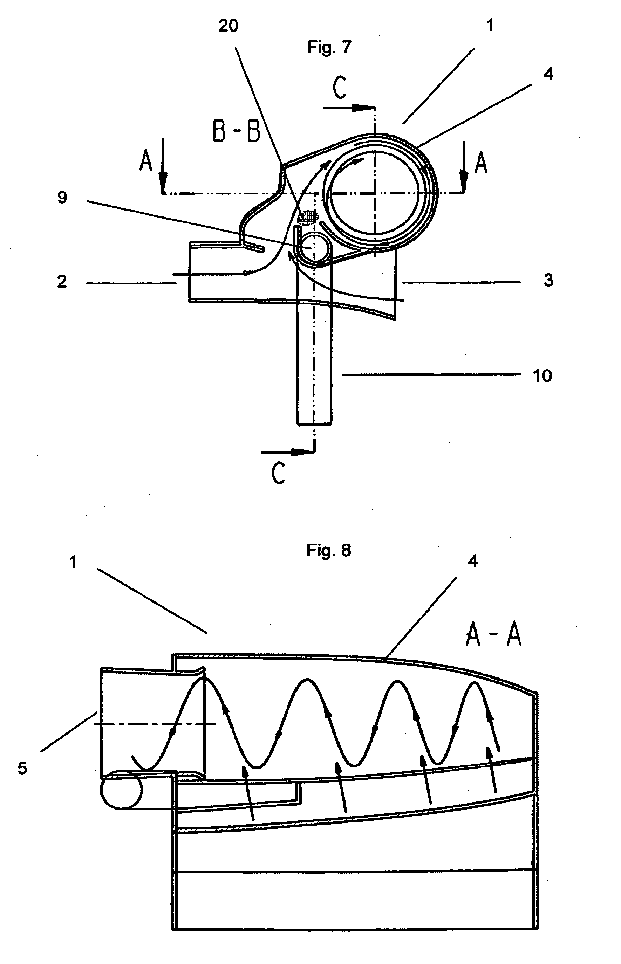

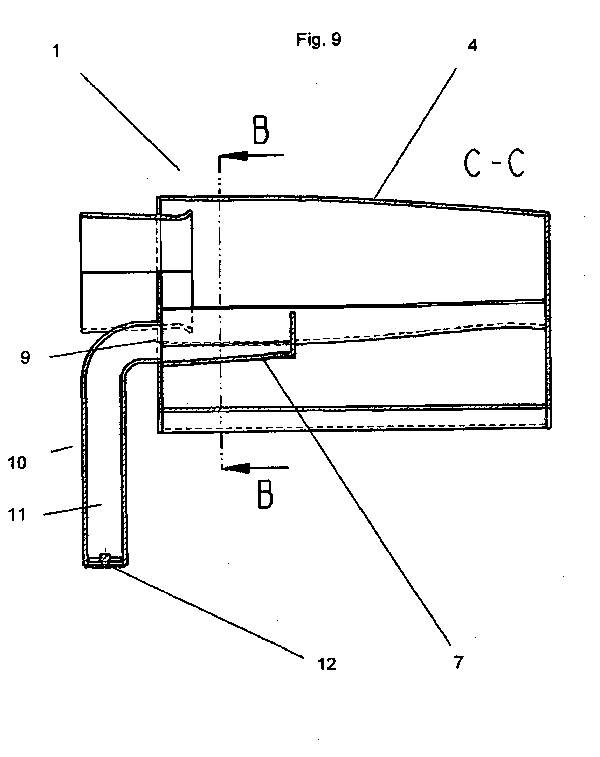

In den Fig. 1 bis 4 ist der Zyklonabscheider mit der horizontalen Zyklonachse nach dem bisherigen Stand der Technik, in den Fig. 5 bis 9 dann der Zyklonabscheider mit horizontalen Zyklonachse gemäß der vorliegenden Erfindung dargestellt. In der Fig. 5 ist der Zyklonabscheider in einer perspektivischen Ansicht dargestellt, in Fig. 6 ist der Zyklonabscheider in einem Teilschnitt, insbesondere die Sammelleitung mit Öffnung zu sehen. In der Fig. 7 ist der Zyklonabscheider im Querschnitt dargestellt, in dem die horizontale Zyklone, die Sammelleitung mit einer Öffnung und einem Röhrchen zu sehen sind. In der Fig. 8 und 9 sind weitere anschauliche Schnitte des Zyklonabscheiders A - A und C - C dargestellt.

### Ausführungsbeispiel der Erfindung

Die Anwendung der neuen technischen Lösung des Abscheiders von Wassertropfen aus der Luftströmung mit einer Zyklone mit horizontaler Achse wird durch die Anpassung des bestehenden Abscheiders 100 ausgeführt, der in Fig. 1 bis 4 dargestellt ist und unzureichende Wirksamkeit hatte.

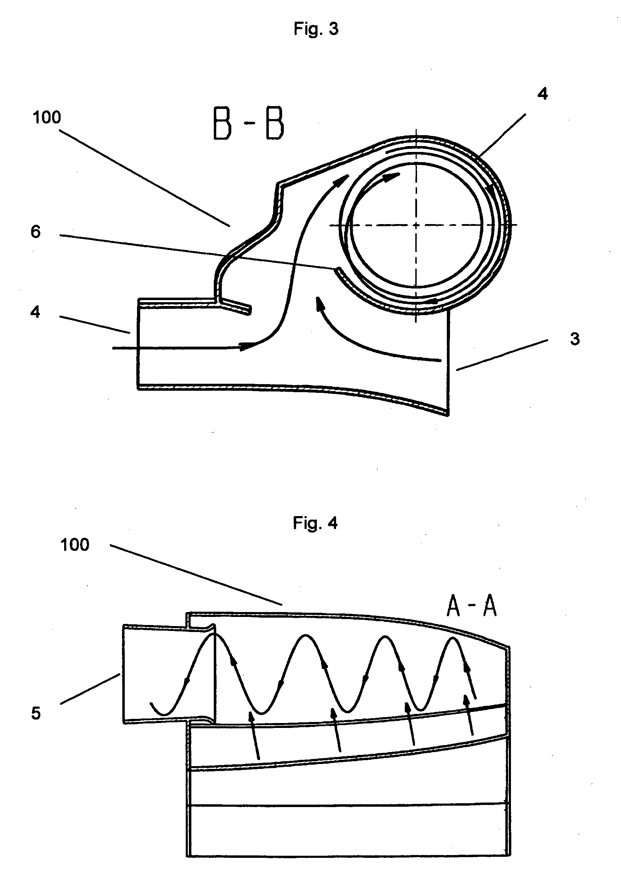

In der Fig. 3 ist im Schnitt B-B dargestellt, wie die Luft mit Wasseraerosol in den Abscheider 100 über den Einlass für das Gemisch der Luft mit Aerosol 2 in den Zyklonbereich entlang der im Wesentlichen ganzen Länge der Zyklone 4 eintritt. Ist das Fahrzeug in Ruheposition, wird der Luft in den Abscheider 100 auch über den aus dem Motor mündenden Einlass 3 angesaugt.

Bei der Fahrt des Fahrzeuges wird durch die Prallwirkung der aus dem Einlass 2 strömenden Luft dieser Einlass 3 allmählich auf Auslassquerschnitt verändert, durch den aus dem Abscheider 100 die größten Wassertropfen und Staubpartikel abgeleitet werden, welche die Änderung der Strömungsrichtung nach oben zum eigentlichen Zyklonabscheider 4 nicht folgen können. Auf diese Art werden aus der Luftströmung die größten Wassertropfen und Staubpartikel durch den Abscheider abgeschieden.

Der eigentliche Zyklonabscheider 4 ist im oberen Gehäuseteil des Abscheiders 100 ausgebildet und weist eine horizontale Achse auf. Die Luft mit Wasseraerosol tritt hier von unten vor allem aus dem Einlass 2 ein und bildet eine spiralförmige Wirbelstruktur, siehe Fig. 1 und 4. Durch Fliehkraftwirkung kommt es zur Abscheidung von Wassertropfen aus der Luftströmung und deren Anhaftung an den Wänden des Abscheiders 4. Der Grund der unzureichenden Wirksamkeit dieses konkret entworfenen Abscheiders 100 ist die fehlende Lösung der Ableitung der abgeschiedenen Tropfen aus den Wänden des eigentlichen zyklonförmigen Abscheiders 4. Die Tropfen werden durch die Luftströmung an der Wand des Abscheiders 4 geschoben, bis diese auf die Kante 6 (Endkante der unteren Wand des Zyklonteils 4 des Abscheiders 100) gelangen. Hier werden sie durch die von unten strömmenden Einlassluft mitgerissen. Erfolgt dies in der Nähe der seitlichen Auslassleitung 5, werden die Tropfen durch die Strömung in diese Leitung mitgerissen. Der Zyklonteil 4 des Abscheiders 100 erfüllt seine Funktion damit schlecht.

Die in den Fig. 5 bis 9 dargestellte neue technische Lösung ergänzt dieses allgemein bekanntes Prinzip des Zyklonabscheiders um die Lösung der kontinuierlichen Ableitung des Abscheidungsproduktes und stellt damit die richtige Funktion des Abscheiders auch mit einer untraditionell und ungünstig horizontal orientierten Zyklonachse sicher. Neu wird in den Raum des Abscheiders 1 eine Sammelleitung 7 in Form eines Beckens angeordnet, siehe perspektivische Ansicht in Fig. 6 oder Schnitt B-B in Fig. 7. Im Bereich über der Sammelleitung 7 bildet sich ein Nachlauf 20. Im Nachlauf 20 sind gegenüber der umgebenden Strömung deutlich reduzierte Geschwindigkeiten der Luftströmung. Dadurch können die abgeschiedenen Wassertropfen, die zu der Kante 6 der unteren Wand des Zyklonabscheiders 4 gelangen, nach unten in die Sammelleitung 7 abtropfen. Die Sammelleitung 7 weist einen geringeren Abfall hin zur Seitenwand 8 des Abscheiders 1 auf, wo eine Öffnung 9 ausgebildet ist, durch die das abgeschiedene Wasser mit einem Röhrchen 10 nach unten heraus aus dem Raum des Abscheiders 1 abgeleitet wird. Das Röhrchen 10 ist am unteren Ende mit einem Rückschlagventil 12 beendet, dass sich öffnen beginnt, wenn der hydrostatische Druck der Wassersäule im senkrechten Teil 11 der Ableitungsröhre 10 höher als der Unterdruck im Abscheider ist und ein Teil des abgeschiedenen Wassers auslässt. Die minimale senkrechte Länge des Röhrchens (10) muss deshalb mindestens so groß sein, damit der hydrostatische Druck der entstandenen Wassersäule höher als der größte Betriebsunterdruck im Abscheider ist.

Zugleich vermeidet das Rückschlagventil 12 die Luftansaugung durch die Ableitungsröhre 10. So wird eine kontinuierliche selbsttätige Ableitung des abgeschiedenen Wassers außerhalb des Raumes des Abscheiders 1 sichergestellt.

### Gewerbliche Anwendbarkeit

Der Zyklonabscheider mit horizontaler Zyklonachse kann bei allen Verbrennungsmotoren, insbesondere bei Verbrennungsmotoren von Kraftfahrzeugen eingesetzt werden.

## Patentansprüche

1. Ein Zyklonabscheider (1) mit horizontaler Zyklonachse (4), der
- einen Einlass für das Gemisch der Luft mit Aerosol (2) in den Zyklonbereich,
- eine Zyklone mit horizontaler Achse (4),
- einen Luftauslass (5) umfasst, wobei
in einen Raum des Abscheiders (1) unter eine Endkante (6) einer unteren Wand der Zyklone (4) eine Sammelleitung (7) in Form eines Beckens angeordnet ist, **dadurch gekennzeichnet, dass** die Sammelleitung (7) einen geringeren Abfall hin zu einer Seitenwand (8) des Abscheiders (1) aufweist, wo eine Öffnung (9) ausgebildet ist, die in eine senkrecht nach unten gerichtete Ableitungsröhre (10) mündet und, dass sich der Einlass (2) entlang der im Wesentlichen ganzen Länge der Zyklone (4) erstreckt.

2. Ein Zyklonabscheider (1) mit horizontaler Zyklonachse (4) nach Anspruch 1,
**dadurch gekennzeichnet, dass** dieRöhre(10)amunteren Ende mit einem Rückschlagventil (12) beendet ist, das sich dann öffnet, wenn der hydrostatische Druck der Wassersäule in der Röhre (10) den Unterdruck im Abscheider überschreitet und so das abgeschiedene Wasser aus der Röhre (10) ablässt.

## Claims

1. Cyclone separator (1) having a horizontal cyclone axis (4), which cyclone separator (1) comprises
- an inlet for the mixture of the air with aerosol (2) into the cyclone region,
- a cyclone having a horizontal axis (4), and
- an air outlet (5),
a collecting line (7) being arranged in the form of a basin in a space of the separator (1) under an end edge (6) of a lower wall of the cyclone (4), **characterized in that** the collecting line (7) has a smaller drop towards a side wall (8) of the separator (1), where an opening (9) is formed which opens into a perpendicularly downwardly directed drainage tube (10), and **in that** the inlet (2) extends along substantially the entire length of the cyclone (4).

2. Cyclone separator (1) having a horizontal cyclone axis (4) according to Claim 1, **characterized in that** the tube (10) is ended at the lower end with a non-return valve (12) which opens when the hydrostatic pressure of the water column in the tube (10) exceeds the vacuum in the separator and thus discharges the separated water from the tube (10).

## Revendications

1. Séparateur cyclonique (1) doté d'un axe de cyclone horizontal (4), lequel comporte
- une entrée pour le mélange d'air et d'aérosol (2) dans la région de cyclone,
- un cyclone présentant un axe horizontal (4),
- une sortie d'air (5),
un conduit collecteur (7) sous la forme d'un bac étant disposé dans une chambre du séparateur (1) en dessous d'un bord d'extrémité (6) d'une paroi inférieure du cyclone (4), **caractérisé en ce que** le conduit collecteur (7) présente une pente plus douce en direction d'une paroi latérale (8) du séparateur (1), où est réalisée une ouverture (9) qui débouche dans un tuyau d'évacuation (10) orienté verticalement vers le bas, et **en ce que** l'entrée (2) s'étend le long d'essentiellement toute la longueur du cyclone (4).

2. Séparateur cyclonique (1) doté d'un axe de cyclone horizontal (4) selon la revendication 1, **caractérisé en ce que** le tuyau (10) se termine à l'extrémité inférieure par une soupape anti-retour (12) qui s'ouvre lorsque la pression hydrostatique de la colonne d'eau dans le tuyau (10) dépasse la dépression dans le séparateur et évacue ainsi l'eau séparée hors du tuyau (10).
